# FASCICULE DE BREVET EUROPEEN

(11) **EP 0 764 793 B1**
(45) Date de publication et mention de la délivrance du brevet: **08.11.2000**
(21) Numéro de dépôt: 96114787.3
(22) Date de dépôt: 16.09.1996
(51) Int. Cl.: F16D 13/64, F16D 13/68, F16F 15/12

(54) **Embrayage à friction rigide pour véhicules automobiles**
Trockenreibungskupplung für Kraftfahrzeuge
Dry friction clutch for automotive vehicles

(30) Priorité: 20.09.1995 FR 9511032
(43) Date de publication de la demande: 26.03.1997
(73) Titulaire: VALEO, 75017 Paris (FR)
(72) Inventeur: Lefevre, Gérard, 80480 Vers/Selle (FR)
(74) Mandataire: Gamonal, Didier

(56) Documents cités:
- EP-A- 0 372 118
- DE-A- 4 023 836
- DE-A- 4 322 578
- DE-U- 9 012 840
- GB-A- 1 140 048
- US-A- 3 375 911
- US-A- 4 068 749

## Description

La présente invention concerne les embrayages du type dit à friction rigide qui sont habituellement associés dans les véhicules automobiles à un volant amortisseur du genre comportant deux masses coaxiales montées mobiles l'une par rapport à l'autre à l'encontre d'un dispositif élastique d'amortissement. Un tel volant étant capable d'assurer l'amortissement des vibrations indésirables du moteur en amont de la friction, c'est-à-dire du disque support de garnitures lui-même couplé au moyeu de l'embrayage, on a pu se dispenser de l'incorporation de moyens élastiques d'amortissement des vibrations dans ce couplage, ce qui a conduit à l'adoption de frictions rigides.

Cependant il demeure que les désalignements ou désaxages de l'arbre de boîte par rapport à l'arbre moteur créent des problèmes de bruit et d'usure sur les véhicules. Ce problème a pu trouver des solutions dans le cadre de frictions équipées de moyens amortisseurs (portées coniques, paliers élastiques, etc.) mais ne semble pas avoir été abordé dans le cas de frictions rigides.

La présente invention a pour objet d'offrir un moyen de résoudre dans une friction rigide ces problèmes résultant des tolérances inévitables en matière de désalignement entre arbre de boîte et arbre moteur dans les véhicules automobiles.

On a déjà proposé à cet effet, en particulier dans le document FR-A-2 724 995, l'aménagement entre disque et moyeu d'un jeu prédéterminé en fonction des tolérances de désalignement moteur-boîte avec un système élastique de contrôle du rattrapage de ce jeu par le développement de forces d'amortissement en sens axial et en sens radial avec effet d'hystérésis jusqu'à suppression du désalignement.

L'aménagement du jeu pouvait intervenir par exemple dans la fixation du disque porte-garnitures sur le voile du moyeu ou dans un accouplement du voile sur le moyeu et le système élastique de contrôle des conditions de rattrapage du jeu pouvait prendre diverses formes à la condition que se trouvent assurés :
- un amortissement radial ;
- un amortissement axial ;
- une hystérésis ; et
- la transmission du couple.

A la lumière du document FR-A-2 724 995 on peut songer à faire intervenir le système élastique latéralement par rapport à ladite zone d'engrenage. Par exemple on peut fixer un disque sur le voile et faire intervenir le système élastique entre ledit disque et la denture allongée du moyeu comme décrit dans le document DE-A-43 22 578 conforme au préambule de la revendication 1.

Une telle solution est encombrante axialement et augmente la consommation de matière pour le moyeu.

Ces divers aménagements entre disques et moyeu, offraient des solutions globalement satisfaisantes au problème posé, mais au prix de modifications des conditions de fabrication et de montage du disque porte-garnitures, ce que l'ont peut souhaiter éviter dans certaines applications.

La présente invention propose à cet effet le moyen de résoudre les mêmes problèmes résultant des désalignements entre arbres de boîte et de volant moteur, sans nécessiter d'intervention sur les conditions de fabrication et de montage du disque porte-garnitures de l'embrayage, et sans augmenter la consommation de matière pour le moyeu, ainsi que l'encombrement axial.

Ce problème est résolu par la partie caractérisante de l'invention.

Grâce à l'invention le disque de friction est très compact axialement à sa périphérie interne au niveau de la zone d'engrenage précitée.

Dans une forme de réalisation les évidements ménagés en au moins deux positions diamétralement opposées de ladite zone d'engrenage sont garnis de blocs ou plots en élastomères.

Avec un tel agencement les blocs ou plots en élastomères développent les réactions élastiques requises pour l'amortissement des oscillations attribuables au désalignement.

Pour la réalisation de l'effet d'hystérésis jusqu'à compensation ou rattrapage du désalignement on prévoit la disposition d'une rondelle de freinage sur au moins un côté de l'engrenage.

Selon une autre disposition de l'invention l'engrenage est avantageusement flanqué de flasques de confinement portés soit par le voile soit par le moyeu.

Dans une variante de réalisation il est prévu un garnissage en matériau élastomère du jeu ménagé entre dentures de l'engrenage et selon un développement de cette variante il est prévu une adhérisation de l'ensemble du garnissage élastomère.

Il s'avère que dans le cas d'un tel développement on peut faire l'économie des moyens de frottement constitués par les rondelles de freinage, ainsi que des moyens de confinement constitués par les flasques précités l'effet d'hystérésis requis peut en effet être obtenu dans ce cas par le comportement intrinsèque du matériau élastomère, en particulier dans les zones de garnissage du jeu entre dentures.

Les caractéristiques et avantages de l'invention ressortiront d'ailleurs de la description qui va suivre de divers exemples de réalisation en référence aux dessins annexés dans lesquels :
- la figure 1 est une vue schématique partielle en coupe axiale d'un embrayage selon l'invention associé à un volant amortisseur ;
- la figure 2 est une vue de détail en élévation du moyeu de l'embrayage ;
- la figure 3 est une vue en coupe selon le plan radial III de la figure 2 ;
- la figure 4 est une vue partielle agrandie en coupe selon le plan IV-IV de la figure 2 ;
- la figure 5 est une vue semblable à celle de la figure 2 mais relative à une variante ;
- la figure 6 montre un détail en coupe selon le plan radial VI de la figure 5 ;
- la figure 7 est une vue semblable à celle des figures 2 et 5 montrant une autre variante ;
- la figure 8 est une vue en coupe selon le plan radial VIII de la figure 7 ;
- la figure 9 est une vue en coupe axiale d'une variante supplémentaire.

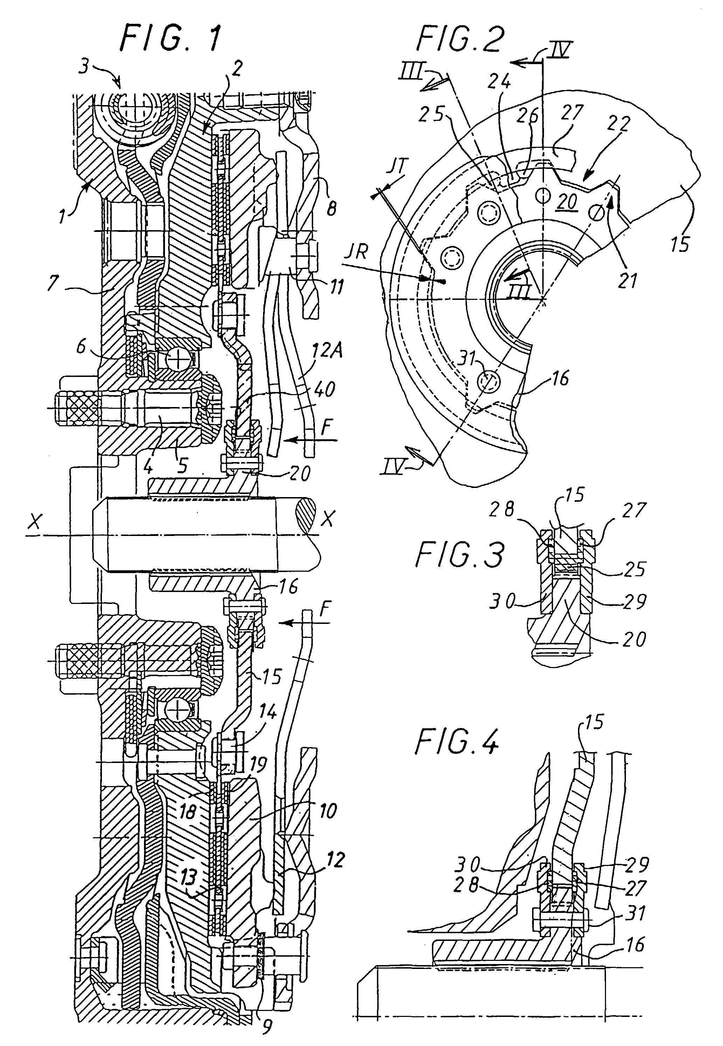

Suivant la forme de réalisation choisie et représentée à la figure 1, l'invention est appliquée à un embrayage associé à un volant amortisseur comportant deux parties coaxiales 1, 2 montées mobiles l'une par rapport à l'autre à l'encontre de moyens élastiques 3 appartenant à un dispositif élastique d'amortissement comprenant ici des ressorts agissant circonférentiellement. En variante les ressorts peuvent agir radialement.

La partie 1 est un plateau 7 fixé au moyen de vis 4 en bout d'un arbre de vilebrequin (non détaillé). La partie 2 de forme annulaire, constituant le plateau de réaction de l'embrayage, est montée en rotation sur un moyeu tubulaire 5 de la première partie 1 par l'intermédiaire d'un roulement 6. Le plateau de réaction 2 porte le couvercle d'embrayage 8, lequel porte de son côté, de manière usuelle, par l'intermédiaire de languettes 9 un plateau de pression 10, ainsi que, par l'intermédiaire de colonnettes 11, un diaphragme 12.

Le diaphragme prend appui sur le fond du couvercle pour solliciter le plateau de pression 10 en direction du plateau de réaction 2 en enserrant un disque de friction 13 qui est fixé au moyen de rivets 14 au voile 15 porté par un moyeu 16 calé en rotation par un montage à cannelures sur l'arbre d'entrée d'axe X-X de la boîte de vitesses (non détaillée) du véhicule. Une série de lumières 40 ménagées dans le voile 15 autour du moyeu 16 donnent accès aux vis de fixation du volant.

Le disque de friction 13 est garni de manière usuelle sur les deux faces de sa zone périphérique externe des garnitures de frottement 18, 19 qui sont destinées à être serrées sous l'action du diaphragme 12 par le plateau de pression 10 contre le plateau de réaction 2 en position normalement engagée de l'embrayage. Pour débrayer, l'embrayage illustré étant ici du type poussé, on interviendra en poussant selon les flèches F, sur les doigts 12A du diaphragme 12 à l'aide d'une butée de débrayage (non détaillée) qui est montée mobile selon l'axe X-X de la boîte de vitesses.

On notera (figure 1), en position embrayage débrayé, que le diaphragme 12 est proche du disque de friction 13, lui-même proche des vis 4. Il importe donc que le disque de friction 13 soit compact axialement à cet endroit.

C'est dans ce contexte qu'intervient la présente invention concernant le montage du voile 15 de manière à obtenir un fonctionnement irréprochable de l'embrayage malgré un désalignement susceptible de se produire entre l'axe X-X de la boîte de vitesses et l'axe du moteur, ici l'axe de l'arbre (vilebrequin) portant le plateau 1 du volant amortisseur. Le résultat d'un tel désalignement sera un défaut de centrage du disque de friction 13, ou plus précisément de ses garnitures de frottement 18, 19 entre les faces affrontées des plateaux de réaction 2 et de pression 10.

En position normalement engagée de l'embrayage un tel décentrage conduit à une perturbation génératrice d'usure et de bruits, puisqu'au mouvement d'entraînement régulier en rotation de l'arbre d'entrée de la boîte de vitesses par l'intermédiaire du moyeu 16 viendront se superposer des sollicitations périodiques selon une orientation radiale déterminée par le désalignement.

En position débrayée les garnitures 18, 19 peuvent lécher les plateaux de pression 10 et de réaction 2 et donc s'user.

Selon la présente invention on va donc réaliser les conditions d'une correction automatique d'un tel désalignement dans le cadre d'une friction rigide du type considéré en introduisant dans la structure de celle-ci, entre le moyeu 16 et le voile 15, une liaison élastiquement déformable dans des limites correspondant à un jeu prédéterminé, à l'encontre de forces d'amortissement et en sens axial et en sens radial avec un effet d'hystérésis. Le jeu est réalisé dans une zone d'engrenage 21,22 entre le voile 15 et le moyeu 16.

Plus précisément selon la forme de réalisation des figures 1 à 4, la liaison entre moyeu 16 et voile 15 est réalisée par emboîtement, sur une couronne 20 à denture 21 à dents de forme générale trapézoïdale de la périphérie radialement externe du moyeu 16, d'une denture 22 de forme complémentaire radialement ménagée à cet effet sur la périphérie radialement interne du voile 15 pour formation d'une zone d'engrenage 21,22, le tout de manière en soi connue avec un certain jeu J_{R} en sens radial et un autre jeu J_{T} en sens tangentiel. Selon l'invention ces jeux sont déterminés en fonction de tolérances permises en matière de désalignements respectivement radial et angulaires.

Selon la forme de réalisation considérée de l'invention dans deux positions diamétralement opposées de la périphérie radialement interne du voile, la dent 22 est remplacée par une pièce d'attaque 24 constituée par une dent au tracé délimité par deux faces latérales en forme de S à une certaine distance de chacune des deux dents 21 voisines du moyeu.

L'espace ainsi offert entre la pièce d'attaque 24 et les deux dents 21 voisines est garnie de plots 25, 26 en matériau élastomère de profil correspondant.

La zone d'engrenage des deux dentures est flanquée de part et d'autre par des rondelles 27, 28 de freinage en matériau de frottement et elles-mêmes prises et maintenues entre deux flasques annulaires 29, 30 assemblés au moyeu de rivets 31 avec la couronne 20. Ces rondelles 27,28 assurent un frottement avec effet d'hystérésis lors du mouvement relatif entre le voile 15 et le moyeu 16.

Ces flasques 29, 30 sont localement creusés pour logement des rondelles 27, 28.

Les conditions de confinement ainsi réalisées pour les plots élastiques 25, 26, d'une part, et pour les rondelles 27, 28 de freinage, d'autre part, déterminent les conditions d'amortissement des mouvements de rattrapage de jeux pour des caractéristiques donnés des matériaux élastomères choisis : la possibilité est offerte ainsi aux concepteurs d'agir sur un nombre important de paramètres pour répondre à diverses conditions désirables des amortissements à réaliser.

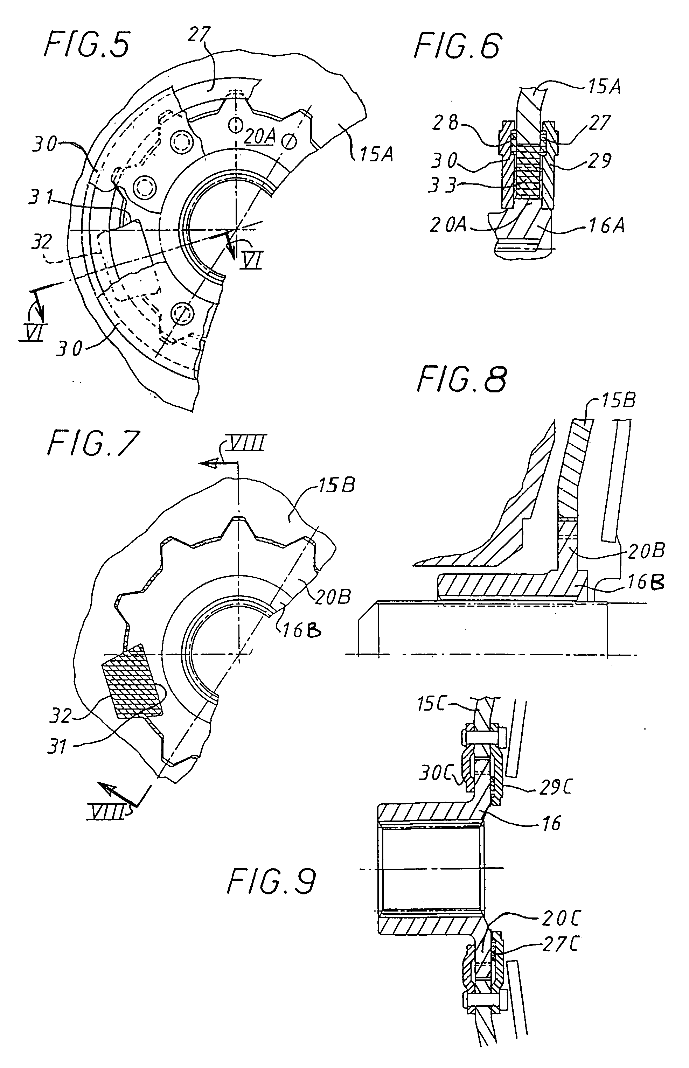

Dans la forme de réalisation illustrée aux figures 5 et 6 (les mêmes références étant reprises pour désigner des éléments semblables) l'invention est appliquée à un type de moyeu présentant en deux positions diamétralement opposées de sa couronne dentée 20A une échancrure 31 de forme générale trapézoïdale destinée à coopérer avec une échancrure complémentaire 32 du voile, ces deux échancrures étant normalement affrontées en position de repos pour recevoir dans certaines structures d'embrayage un équipement de moyens préamortisseurs.

Dans le cas présent chaque fenêtre constituée par une paire d'échancrures 31, 32 est garnie d'un bloc massif d'attelage 33 en matière élastomère tendant à opposer une réaction élastique à tout déplacement angulaire relatif entre voile 15A et moyeu 16A. On retrouve les rondelles de freinage 27, 28 et les flasques de confinement 29, 30.

La variante illustrée aux figures 7 et 8 diffère de la précédente par le premier fait visible sur le dessin que non seulement les fenêtres 31, 32, mais encore la totalité de l'espace de jeux ménagés entre voile 15B et couronne 20B du moyeu 16B se trouve rempli totalement d'un garnissage en matériau élastomère, et par le second fait que ce garnissage élastomère fait l'objet d'un traitement d'adhérisation sur les pièces adjacentes 15B, 20B.

Dans ces conditions il s'est avéré possible de se dispenser des rondelles de frottement 27, 28 ainsi que des flasques de confinement 29, 30 des formes de réalisation précédentes, ce qui représente, bien entendu, une simplification considérable de la construction. Cette solution est très compacte axialement.

La transmission du couple entre voile et couronne de moyeu est assurée ici par des déformations adaptées de l'ensemble de garnissage élastomère; la liaison conservant en toutes positions une certaine souplesse, tandis que l'effet d'hystérésis nécessaire pour la stabilisation de l'accouplement voile-moyeu dans la position de compensation des défauts de désalignement est obtenu grâce a un comportement plastique du matériau élastomère en particulier dans les zones de garnissage du jeu entre dentures. Le voile 15B occupe une bonne position.

La figure 9 illustre un cas intermédiaire où l'on retrouve deux flasques de confinement 29C, 30C fixés cette fois sur la périphérie radialement interne du voile 15C, seul le flasque 29C situé côté boîte de vitesses servant à retenir une rondelle de freinage 27C tandis qu'un frottement métal sur métal est prévu entre le flasque 30C et la couronne 20C du moyeu.

Dans tous les cas la couronne 20,20A,20B,20C est peu épaisse en sorte que sa denture 22 est axialement de faible longueur légèrement supérieure à l'épaisseur du voile 15 et de sa denture 21 pour un bon engrenage entre le voile 15 et le moyeu 16.

Le moyeu 16 est donc économique, de forme simple et peu encombrant axialement à sa périphérie externe. Sa consommation de matière est faible. On tire parti de la zone d'engrenage entre le voile 15 et le moyeu 16 (sa couronne 20).

En se reportant à la figure 1, on voit que l'espace entre le moyeu tubulaire 5 et le diaphragme 12 peut être faible lorsque le diaphragme 12 est en position embrayage débrayé.

Grâce à l'invention on n'augmente pas l'encombrement axial de l'embrayage. Grâce aux flasques de confinement et à la ou les rondelles de freinage on obtient une bonne perpendicularité du voile 15.

## Revendications

1. Embrayage à friction rigide pour association avec un volant du type dit amortisseur, du genre comprenant un disque porte-garnitures (13) solidarisé avec un voile (15) porté par un moyeu (16), une zone d'engrenage (21, 22) entre une denture (21) radialement interne du voile (15) et une denture (22) radialement externe du moyeu (16), un aménagement dans ladite zone d'engrenage (21, 22) entre le voile (15) et le moyeu (16) d'un jeu prédéterminé en fonction des tolérances de désalignement moteur-boîte et un système élastique de contrôle de rattrapage de ce jeu par le développement de forces d'amortissement avec effet d'hystérésis jusqu'à compensation du désalignement, caractérisé par l'aménagement dudit système élastique dans la zone d'engrenage (21, 22).

2. Embrayage selon la revendication 1 caractérisés en ce que des évidements ménagés en au moins deux positions diamétralement opposées de ladite zone d'engrenage sont garnis de plots ou de blocs élastomères (25, 26, 33).

3. Embrayage selon la revendication 2, caractérisé en ce qu'une rondelle de freinage (27, 28) est disposée sur un côté au moins de l'engrenage (21, 22).

4. Embrayage selon la revendication 2 ou 3 caractérisé en ce que l'engrenage est flanqué de flasques de confinement (29, 30).

5. Embrayage selon l'une quelconque des revendications 2 à 4, caractérisé en ce que le jeu entre dentures est garni de matériau élastomère.

6. Embrayage selon la revendication 5, caractérisé par un traitement d'adhérisation de l'ensemble du garnissage élastomère.

## Patentansprüche

1. Reibungskupplung mit starrer Reibungskupplungsscheibe zur Verbindung mit einem als Dämpfungsschwungrad bezeichneten Schwungrad, umfassend eine belagtragende Scheibe (13), die fest mit einer an einer Nabe (16) angebrachten Zwischenscheibe (15) verbunden ist, einen Eingriffsbereich (21, 22) zwischen einer radial inneren Zahnung (21) der Zwischenscheibe (15) und einer radial äußeren Zahnung (22) der Nabe (16), eine in dem besagten Eingriffsbereich (21, 22) zwischen der Zwischenscheibe (15) und der Nabe (16) vorgesehene Anordnung eines vorbestimmten Spiels in Abhängigkeit von den Fehlausrichtungstoleranzen zwischen Motor und Getriebe und ein elastisches System zur Kontrolle der Nachstellung dieses Spiels durch die Entwicklung von Dämpfungskräften mit Hysteresewirkung bis zum Ausgleich der Fehlausrichtung, **gekennzeichnet** durch die Anordnung des besagten elastischen Systems im Eingriffsbereich (21, 22).

2. Kupplung nach Anspruch 1, **dadurch gekennzeichnet**, daß in wenigstens zwei diametral gegenüberliegenden Positionen des besagten Eingriffsbereichs eingearbeitete Ausnehmungen mit Elastomerplättchen oder Elastomerblöcken (25, 26, 33) ausgekleidet sind.

3. Kupplung nach Anspruch 2, **dadurch gekennzeichnet**, daß eine Sicherungsscheibe (27, 28) auf wenigstens einer Seite des Eingriffsbereichs (21, 22) angeordnet ist.

4. Kupplung nach Anspruch 2 oder 3, **dadurch gekennzeichnet**, daß der Eingriffsbereich durch Begrenzungsflansche (29, 30) eingefaßt ist.

5. Kupplung nach einem der Ansprüche 2 bis 4, **dadurch gekennzeichnet**, daß das Spiel zwischen den Zahnungen durch Elastomermaterial ausgekleidet ist.

6. Kupplung nach Anspruch 5, **gekennzeichnet** durch eine Haftbehandlung der gesamten Elastomerauskleidung.

## Claims

1. A rigid friction clutch for association with a so-called damping flywheel, of the kind comprising a disc (13) carrying liners and fixed to a damper plate (15) carried by a hub (16), a meshing zone (21, 22) between a set of teeth (21) arranged radially internally on the damper plate (15) and a set of teeth (22) arranged radially externally on the hub (16), means in the said meshing zone (21, 22) between the damper plate (15) and the hub (16) defining a clearance which is predetermined as a function of misalignment tolerances between the engine and gearbox, and an elastic control system for taking up the said clearance by developing damper forces with hysteresis effect until the misalignment is compensated for, characterised by the arrangement of the said elastic system within the meshing zone (21, 22).

2. A clutch according to Claim 1, characterised in that openings formed in at least two diametrically opposed positions in the said meshing zone are provided with elastomeric pads or blocks (25, 26, 33).

3. A clutch according to Claim 2, characterised in that a braking ring (27, 28) is disposed on at least one side of the meshing means (21, 22).

4. A clutch according to Claim 2 or Claim 3, characterised in that the meshing means is flanked by restricting radial plates (29, 30).

5. A clutch according to any one of Claims 2 to 4, characterised in that the clearance between the sets of teeth contains elastomeric material.

6. A clutch according to Claim 5, characterised by the adhesive treatment of the assembly comprising the said elastomeric material.
